# EUROPÄISCHE PATENTSCHRIFT

(11) **EP 0 624 532 B1**
(45) Veröffentlichungstag und Bekanntmachung des Hinweises auf die Patenterteilung: **04.06.1997**
(21) Anmeldenummer: 94106655.7
(22) Anmeldetag: 28.04.1994
(51) Int. Cl.: B65G 47/84

(54) **Vorrichtung zum Sortieren von Flaschen oder dergleichen Behältern**
Device for sorting bottles or similar containers
Dispositif de tri de bouteilles ou de récipients analogues

(30) Priorität: 06.05.1993 DE 4315038
(43) Veröffentlichungstag der Anmeldung: 17.11.1994
(73) Patentinhaber: KHS Maschinen- und Anlagenbau Aktiengesellschaft, D-47057 Duisburg (DE)
(72) Erfinder: Weissenfels, Christoph, D-55546 Neu-Bamberg (DE); Lönnig, Manfred, D-55543 Bad Kreuznach (DE)

(56) Entgegenhaltungen:
- EP-A- 0 242 017
- DE-A- 3 244 331

## Beschreibung

Die Erfindung bezieht sich auf eine Vorrichtung zum Sortieren von Flaschen oder dergleichen Behälter gemäß Oberbegriff Patentanspruch 1.

In der Getränkeindustrie ist es notwendig, rückgeführte Flaschen vor ihrer weiteren Behandlung nach Flaschenart, d. h. insbesondere nach Größe, Form, Material usw. zu sortieren.

Bekannt ist hierfür eine als Durchlaufsortierer ausgebildete Sortiervorrichtung (DE-OS 32 44 331), bei der die Flaschen als einspuriger Flaschenstrom über einen Zuförderer zugeführt und mittels einer an diesem Zuförderer vorgesehenen Kontrolleinrichtung hinsichtlich ihrer Flaschenart erfaßt werden. Der Sortierbereich der Sortiervorrichtung besteht aus mehreren senkrecht zur Förderrichtung anschließenden Sortierbändern. Mit Hilfe von synchron mit diesen Sortierbändern bewegten Überschubelementen werden die Flaschen beim Sortieren gesteuert auf die Sortierbänder verteilt, so daß sich schließlich auf jedem Sortierband Flaschen derjenigen Flaschenart befinden, die diesem Sortierband zugeordnet ist.

Bei der bekannten Vorrichtung sind sämtliche Überschubelemente an einem Hilfstransporteur vorgesehen, der sich an einer Seite des Sortierbereiches befindet. Jedes Überschubelement ist aus einer Ausgangsstellung in Überschubrichtung und zurück in die Ausgangsstellung bewegbar, und zwar durch einen Mitnehmer, der nach dem Aktivieren des betreffenden Überschubelementes durch eine Aktivierungseinrichtung mit einer die Bewegung steuernden Steuerkurve zusammenwirkt. Jedes Überschubelement bildet an einem Kopfstück eine Anlagefläche, die dann beim Überschieben einer Flasche gegen diese zur Anlage kommt und die Flasche senkrecht zur Förderrichtung des Sortierbereiches von einem Sortierband auf das der jeweiligen Flaschenart zugeordnete Sortierband schiebt.

Nachteilig ist bei der bekannten Sortiervorrichtung insbesondere, daß Flaschen mit geringem Gewicht beim Überschieben leicht umfallen können, und zwar insbesondere dann, wenn die von den Sortierbändern gebildete Transportstrecke nicht völlig eben ist. Auch Reibungskräfte zwischen den Flaschenböden und den Sortierbändern unterstützen die Tendenz zum Umfallen der Flaschen.

Ferner ist durch die DE-A-3244 331 ein selektives Überführungssystem bekannt, mit welchem Gegenstände von einem Förderer auf einen weiteren Förderer abgedrängt werden. Hierbei können in Förderrichtung und einseitig mehrere Ausstoßhebel gegen die Gegenstände verfahren werden. Ein zwangsgesteuerter Abschub dieser Gegenstände ist nicht möglich.

Aufgabe der Erfindung ist es, eine Sortiervorrichtung aufzuzeigen, die diese Nachteile vermeidet und auch zum Verarbeiten von Flaschen oder dergleichen Behältern mit geringem Gewicht und dabei insbesondere auch solchen aus Kunststoff geeignet sind.

Zur Lösung dieser Aufgabe ist eine Sortiervorrichtung entsprechend dem kennzeichnenden Teil des Patentanspruches 1 ausgebildet.

Bei der Vorrichtung gemäß der Erfindung sind die Überschubelemente bzw. deren Kopfstücke oder die an diesen gebildeten Überschub-oder Anlageflächen jeweils paarweise derart vorgesehen, daß beim Überschieben eines Behälters dieser zwischen wenigstens zwei derartigen Flächen an einem Überschubelement der ersten und zweiten Gruppe angeordnet ist, wobei die beiden Überschubelemente beim Überschieben gleichsinnig bewegt werden. Jeder Behälter ist somit quer zur Förderrichtung A beidseitig durch jeweils ein Überschubelement abgestützt und gegen Umfallen gesichert.

Die Anordnung der Überschubelemente in zwei Gruppen beidseitig von einer vertikalen Mittelebene des Sortierbereiches hat weiterhin auch den Vorteil, daß die Behälter über den Zuförderer der mittleren Spur des Sortierbereiches zugeführt werden können und es dann möglich ist, daß beidseitig an die mittlere Spur weitere Spuren anschließen. Beim Sortieren können also die Behälter von dieser mittleren Spur aus nach beiden Seiten auf benachbarte Spuren durch Überschieben verteilt werden. Auch bei einer Vielzahl von getrennten Transportbereichen zum Abführen der sortierten Behälter ergeben sich hierdurch kurze Überschubwege, was ebenfalls zur Erhöhung der Betriebssicherheit beiträgt.

Bei einer bevorzugten Ausführungsform der erfindungsgemäßen Vorrichtung sind für die Steuerung der Überschubelemente der ersten und zweiten Gruppe jeweils wenigstens zwei getrennte Steuerkurven vorgesehen, und zwar jeweils eine Steuerkurve für eine Überschubbewegung mit kürzerem Bewegungshub und eine Steuerkurve für eine Überschubbewegung mit längerem Bewegungshub. Die Überschubelemente besitzten dann jeweils für jede Steuerkurve einen gesonderten Mitnehmer der individuell für einen Eingriff in die zugehörige Steuerkurve aktivierbar ist.

Insbesondere bei einer bezogen auf eine vertikale Mittelebene des Sortierbereiches symmetrischen Ausbildung der Vorrichtung ist die Anzahl der für die ersten und zweiten Überschubelemente jeweils vorgesehenen Steuerkurven um EINS geringer als die Anzahl der zum Abführen der sortierten Behälter vorgesehenen Transportbereiche.

Weiterbildungen der Erfindung sind Gegenstand der Unteransprüche.

Die Erfindung wird im Folgenden anhand der Figuren an einem Ausführungsbeispiel näher erläutert. Es zeigen:
- Fig. 1: in vereinfachter Darstellung und Draufsicht eine als Durchlaufsortierer für Flaschen ausgebildete Sortiervorrichtung gemäß der Erfindung;
- Fig. 2: einen Vertikalschnitt entsprechend der Linie I - I der Figur 1;
- Fig. 3: in vergrößerter Teildarstellung und im Längsschnitt eine der an einem Hilfstransporteur vorgesehenen Stößel-Führungen, zusammen mit einer Teillänge des in dieser Führung angeordneten Stößels eines Überschubelementes, mit zwei Aktivierungselementen für die Mitnehmer sowie mit einer Teildarstellung der die Steuerkurven aufweisenden Platte;
- Fig. 4: einen Schnitt entsprechend der Linie II - II der Figur 3;
- Fig. 5: einen Schnitt entsprechend der Linie III - III durch ein Kopfstück eines Überschubelementes;
- Fig. 6: in vereinfachter Darstellung und in Seitenansicht die Sortiervorrichtung gemäß Figur 1;
- Fig. 7: einen Schnitt entsprechend der Linie IV - IV der Figur 6,
- Fig. 8: in Seitenansicht eine weitere Ausführung einer Aktivierungseinrichtung.

Die in den Figuren dargestellte Sortiervorrichtung besteht im wesentlichen aus einen einspurigen, bei der dargestellten Ausführungsform von einem Transportband gebildeten Zuförderer 1, über den Flaschen 2 unterschiedlicher Flaschenart (hinsichtlich Form, Größe, Durchmesser, Material usw.), insbesondere auch Kunststoff-Flaschen (PET-Flaschen) zugeführt werden, und zwar in Richtung des Pfeiles A einem Förderbereich 3, der von mehreren, senkrecht zur Förderrichtung A aneinander anschließenden Sortierbändern gebildet ist.

Bei der dargestellten Ausführungsform ist die Sortiervorrichtung für eine Drei-Wege-Sortierung ausgebildet und besitzt dementsprechend drei Sortierbänder 4, 5, und 6, von denen das mittlere Sortierband 5 auch die Verlängerung des Transportbandes des Zuförderers 1 sein kann. Bei der dargestellten Ausführungsform ist jedes Sortierband 4, 5, und 6 von einem endlos umlaufenden Transportband, nämlich von einer Schamierbandkette gebildet. Auf den Sortierbereich 3 in Förderrichtung A folgend bilden die Sortierbänder 4 - 6 in einem Ausgangbereich 7 drei jeweils durch Geländer 8 seitlich begrenzte Gassen 4', 5' und 6' zum Abführen der nach Flaschenart sortierten Flaschen 2.

Am Zuförderer 1 ist eine Kontrolleinrichtung 9 vorgesehen die von jeder Flasche 2 passiert wird und in der beispielsweise mit Hilfe eines Bilderkennungs- bzw. Verarbeitssystems die Flaschenart festgestellt wird. Die Kontrolleinrichtung 9 liefert ein entsprechendes Signal an eine Steuereinrichtung 10, über die die Sortierung bzw. die Vorrichtung in der noch näher beschriebenen Weise gesteuert wird.

Beidseitig vom Sortierbereich 3 ist jeweils ein Hilfstransporteur 11a bzw. 11b vorgesehen. Da die Sortiervorrichtung bezüglich einer vertikalen Mittelebene, in der auch die Mittelachse des Zuförderers 1 und des mittleren Transportbandes 5 liegen, im wesentlichen spiegelsymetrisch ausgebildet ist, sind die beiden Hilfsförderer 11a und 11b spiegelsymetrisch zu dieser Mittelebene und ansonsten im konstruktiven Detail identisch ausgebildet.

Jeder Hilfstransporteur 11a und 11b besitzt zwei Ketten 12 und 13, die jeweils in einer vertikalen Ebene parallel zur Transportrichtung A eine geschlossene Schlaufe bilden und von denen die Kette 12 dem Sortierbereich 3 benachbart und die Kette 13 in größerer Entfernung von diesem Sortierbereich angeordnet ist. Die Ketten 12 und 13 sind jeweils über zwei Kettenräder 14 und 15 geführt, von denen die das vordere Ende des Hilfstransporteurs 11a bzw 11b bildenden Kettenräder 14 für die beiden Ketten 12 und 13 auf einer gemeinsamen Welle 16 und die am rückwärtigen Ende des Hilfstransporteurs 11a bzw. 11b vorgesehenen Kettenräder 15 auf einer gemeinsamen Welle 17 angeordnet sind. Die Wellen, die mit ihrer Achse horizontal und senkrecht zur Transportrichtung A liegen sind an einem Maschinengestell drehbar gelagert. Die beiden Wellen 16 und die beiden Wellen 17 sind jeweils über eine Kardan-Gelenk-Anordnung 18, die ebenso wie die Wellen unterhalb des von der oberen Länge der Sortierbänder 4 - 6 gebildeten Sortierbereichs 3 angeordnet sind, miteinander verbunden, so daß beide Hilfstransporteure 11a und 11b bzw. deren Ketten 12 und 13 synchron mit gleicher Geschwindigkeit angetrieben sind, und zwar an den Wellen 16 durch einen Antriebsmotor 22, der über einen die beiden Kettentriebe 19 und 20 und die Welle 21 aufweisenden Antriebsstrang auch zum Antrieb zumindest der Sortierbänder 4 - 6 dient. Über diese antriebsmäßige Verbindung sind die Hilfstransporteure 11a und 11b auch synchron mit den Sortierbändern 4 - 6 derart angetrieben, daß sich die jeweils oberen Längen 12' und 13' der Ketten 12 und 13 mit gleicher Geschwindigkeit und in gleicher Richtung (Förderrichtung A) wie die Sortierbänder 4 - 6 bewegen.

Mit 22' ist ein Impulsgeber bezeichnet, der auf der angetriebenen Welle bzw. Umlenkung der Sortierbänder 4 - 6 sitzt und von der Bewegung dieser Sortierbänder abhängige Impulse an die Steuereinrichtung 10 liefert.

An den beiden Ketten 12 und 13 des Hilfstransporteurs ist eine Vielzahl von Stößelführungen 23 befestigt, die in Umlaufrichtung der Ketten 12 und 13 dicht aufeinander folgen und jeweils beidendig an einem Kettenglied gehalten sind, und zwar an der Außenseite der von der jeweiligen Kette gebildeten Schlaufe. In jeder Stößelführung 23 ist jeweils der Stößel 24 eines Halteelementes 25 in einer horizontalen Achsrichtung senkrecht zur Transportrichtung A verschiebbar geführt.

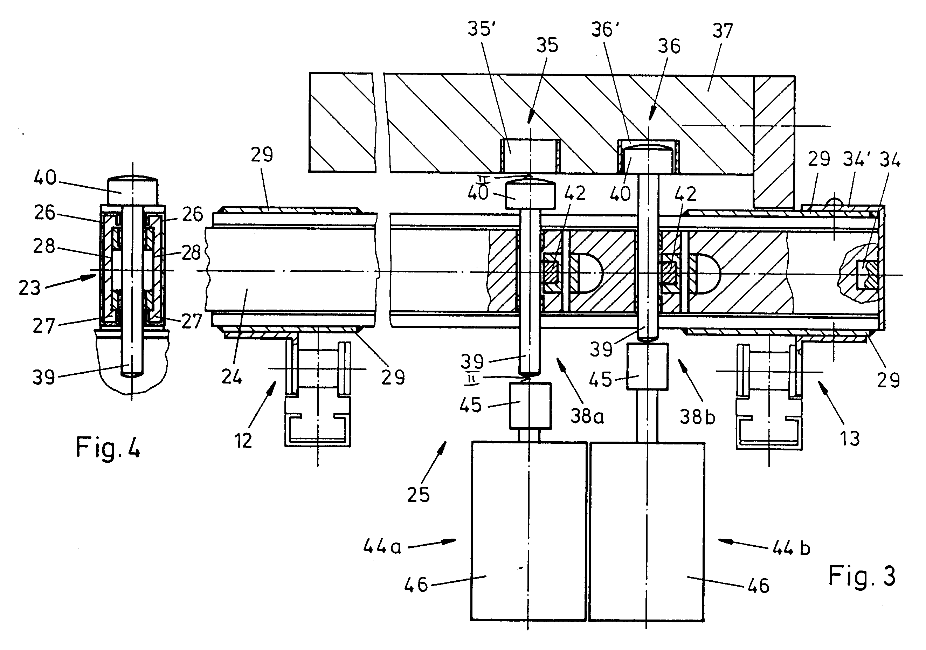

Wie die Figuren 3 und 4 zeigen, besteht jede Stößelführung 23 aus zwei C-Profilen 26, die sich in Richtung der Stößelführung erstrecken, mit ihren offenen Seiten einander zugewandt und voneinander beabstandet sind und jeweils ein Kunststoffprofil 27 mit einer Führungsnut 28 aufnehmen. An der Ober- und Unterseite sind die beiden C-Profile 26 zumindest im Bereich der Enden der Stößelführungen 23 durch eine Platte 29 miteinander verbunden. Eine der beiden Platten, nämlich die in der Figur 3 untere Platte 29 dient gleichzeitig zur Befestigung der jeweiligen Stößelführung 23 an der Kette 12 bzw. 13.

In den beiden Führungsnuten 28 ist der jeweilige Stößel 24 geführt und ist mit seiner unteren Längsseite auf einem Niveau angeordnet, welches mit Abstand über dem Niveau des Förderbereichs 3 liegt. An dem diesem Förder- bzw. Sortierbereich zugewandten Ende ist an jedem aus Edelstahl bestehenden Stößel 24 ein Kopfstück 30 vorgesehen- Dieses besteht aus einer Länge eines T-Profils 31, welches mit einem Schenkel in einen stirnseitigen Schlitz des jeweiligen Stößels 24 eingesetzt und in diesem Schlitz mit einem Stift 24' gesichert ist.

An der dem Schenkel abgewandten Seite des T-Profils 31 ist ein Puffer 32 beispielsweise durch Vulkanisieren befestigt. Dieser Puffer besteht aus zwei Abschnitten, nämlich aus dem Abschnitt 32', der von einem weichen, elastischen Material gebildet und unmittelbar am T-Profil 31 befestigt ist, sowie aus einem Abschnitt 32'', der aus einem haftfähigen, aber verschleißfesten Material besteht und mit der dem T-Profil 31 abgewandten Seite des Abschnittes 32' in geeigneter Weise verbunden ist. Der Puffer 32 steht somit über die dem Stößel 24 abgewandte Seite des T-Profils 31 vor und bildet mit seinem einen Ende, d.h. mit dem Abschnitt 32'' eine Überschub- oder Haltefläche 33.

Diese besitzt in horizontaler Richtung eine Breite, die in etwa gleich oder geringfügig kleiner ist als die Breite der Stößelführung 23 in dieser Richtung und die in vertikaler Richtung eine Länge besitzt, die wesentlich größer ist als die vorgenannte Breite. Die Kopfstücke 30 bzw. die von diesen gebildeten Halteflächen 33 schließen in Bewegungsrichtung des jeweiligen Hilfstransporteurs 11a bzw. 11b unmittelbar aneinander an. Bei der dargestellten Ausführungsform ist die Breite der Halteflächen 33 wesentlich kleiner als der Durchmesser der kleinsten, mit der Sortiervorrichtung zu verarbeitenden Flaschen 2. Durch die Stifte 24' können die Kopfstücke 30 im Falle eines Verschleißes ausgetauscht bzw. erneuert werden.

An seinem dem jeweiligen Kopfstück 30 abgewandten Ende besitzt jeder Stößel 24 einen Permanentmagneten 34, der mit einem Magnetanker 34' an dem dem Kopfstück 30 abgewandten Ende der Stößelführung 23 zusammenwirkt. Der Magnetanker 34', der von einem Winkelstück gebildet ist, sowie der zugehörige Permanentmagnet 34 bilden eine Hemmeinrichtung, mit der das jeweilige Überschubelement 25 bzw. dessen Stößel 24 in einer Ausgangsstellung gehalten ist, in der die Kopfstücke 30 mit ihren Halteflächen 33 seitlich von dem äußeren Sortierband 4 bzw. 6 in einer vertikalen, parallel zur Förderrichtung A verlaufenden Ebene angeordnet sind.

Ist es beim Sortieren der Flaschen 2, die dem Sortierbereich 3 zunächst auf dem mittleren Sortierband 5 stehend zugeführt werden, notwendig, eine Flasche 2 ihrer Flaschenart entsprechend auf eines der beiden seitlichen Sortierbänder 4 bzw. 6 überzuschieben, damit diese Flasche dann in die Gasse 4' bzw. 6' gelangt, so werden gesteuert von der Steuereinrichtung 10 seitlich von dieser Flasche 2 vorgesehene und sich mit der Flasche synchron mitbewegende Überschubelemente 25 an den Hilfstransporteuren 11a und 11b aktiviert und derart betätigt, daß sich diese Überschubelemente 25 bzw. deren Kopfstücke 30 zunächst aus der Ausgangsstellung zur Mitte des Förderbereichs 3 hin bewegen, und zwar die Überschubelemente 25 an den beiden Hilfstransporteuren 11a und 11b spiegelsymetrisch zur Mittelebene so weit, daß die betreffende Flasche 2 an ihren beiden den Hilfstransporteuren 11a und 11b zugewandten Seiten jeweils den Halteflächen 33 der aktivierten Überschubelemente 25 unmittelbar benachbart ist, d. h. die betreffende Flasche von den Halteflächen 33 der aktivierten Überschubelemente 25 seitlich abgestützt ist. Die Anzahl der aktivierten Überschubelemente 25 ist abhängig vom Durchmesser der jeweiligen Flasche 2, der ebenfalls von der Kontrolleinrichtung 9 festgestellt wurde. Bei einer Flasche 2 mit dem größten, zu verarbeiteten Durchmesser, werden beispielsweise an jedem Hilfstransporteur 11a und 11b drei Überschubelemente 25 aktiviert und bei Flaschen 2 mit kleinerem Durchmesser nur jeweils zwei oder nur jeweils ein Überschubelement 25 an jedem Hilfstransporteur 11a bzw. 11b.

Grundsätzlich ist es auch möglich, zwei oder mehrere Überschubelemente 25 an einem Hilfstransporteur und nur ein Überschubelement 25 am anderen Hilfstransporteuer zu aktivieren, und zwar jeweils abhängig vom Durchmesser der Flasche 2. Die Steuerung bzw. Aktivierung der Überschubelemente 25 erfolgt auf jeden Fall so, daß jede Flasche 2 beidseitig von jeweils wenigstens einer Haltefläche 33 abgestützt ist. Durch diese beidseitig Abstützung werden die Flaschen 2 beim Überschieben auf ein seitliches Sortierband 4 bzw. 6 gegen Umfallen gesichert.

Ist eine auf dem mittleren Sortierband 5 stehende Flasche 2 in der beschriebenen Weise etwa nach dem ersten Drittel der Länge des Sortierbereiches 3 beidseitig von Halteflächen 33 abgestützt und soll diese Flasche z. B. auf das Sortierband 4 übergeschoben werden, so werden die entsprechenden Überschubelemente 25 am Hilfstransporteur 11a weiter in Überschubrichtung vorbewegt, während die entsprechenden Überschubelemente 25 am Hilfstransporteur 11b gleichsinnig in Richtung der Ausgangslage zurückbewegt werden, diese Ausgangslage aber noch nicht erreichen, sondern weiterhin mit ihren Halteflächen 33 die Abstützung der Flasche 2 bewirken. Erst etwa im letzten Drittel der Länge des Sortierbereiches 3, also dann, wenn die betreffende Flasche 2 bereits auf das Sortierband 4 übergeschoben ist und dort zuverlässig steht, werden die Überschubelemente 25 in ihre Ausgangsstellung zurückgeführt. Im gleichen Sinne erfolgt auch das Überschieben einer Flasche 2 vom mittleren Sortierband 5 auf das Sortierband 6, nur das in diesem Fall die Bewegungen der Überschubelemente 25 der Hilfstransporteure 11a und 11b vertauscht sind.

Solche Flaschen 2, die ihrer Flaschenart entsprechend in die Gasse 5' gelangen sollen, verbleiben auf dem mittleren Sortierband 5, ohne daß bei der dargestellten Ausführungsform eine Aktivierung der Überschubelemente 25 erfolgt.

Für die vorbeschriebene Bewegung der Überschubelemente 25 weist jeder Hilfstransporteur 11a bzw. 11b zwei Steuerkurven auf, nämlich die der vertikalen Mittelebene näher liegende Steuerkurve 35 und die von dieser Mittelebene weiter entfernt liegende Steuerkurve 36. Beide Steuerkurven, die sich jeweils in einer horizontalen Ebene erstrecken, sind von einer Nut 35' bzw. 36' gebildet, die an der Unterseite einer mit ihren Oberflächenseiten in horizontalen Ebenen angeordneten Platte 37 vorgesehen ist. Die Platte 37 befindet sich oberhalb der oberen Länge 12' und 13' sowie oberhalb der Stößelführungen 23. Die Nuten 35' und 36' sind von der Unterseite der Platte her zugänglich.

Jeder Steuerkurve 35, und 36 ist an jedem Stößel 24 ein eigener Mitnehmer 38a bzw. 38b zugeordnet, der bei der dargestellten Ausführungsform aus einem Bolzen 39 mit Rolle 40 besteht. Die Mitnehmer 38a bzw. 38b sind so angeordnet, daß sich diese bei nicht aktiviertem Überschubelement 25 am Beginn und am Ende der jeweiligen Steuerkurve 35, d. h. im Bereich der an der Welle 17 und an der Welle 16 gebildeten Umlenkungen der Ketten 12 und 13 in vertikaler Richtung exakt unterhalb einer Führungsnut befinden, und zwar der Mitnehmer 38a unter der Steuerkurve 35 und der Mitnehmer 38b unter der Steuerkurve 36.

Die Mitnehmer 38a und 38b sind zwischen einem nichtaktivierten Zustand, in dem der betreffende Mitnehmer bzw. dessen Rolle 40 nicht in die Steuerkurve 35 bzw. 36 eingreift, und einem aktivierten Zustand bewegbar, in dem ein Eingriff des Mitnehmers in die zugehörige Steuerkurve 36 bzw. 36 besteht. Hierfür sind die Bolzen 39, die mit ihren Achsen im Bereich der oberen Längen 12' und 13' in vertikaler Richtung angeordnet sind, um einen vorgegebenen Weg axial am jeweiligen Stößel 24 verschiebbar, und zwar derart, daß in der in der Figur 3 unteren Endstellung (nicht aktivierter Zustand) die Rolle 40 mit Abstand unterhalb der Unterseite der Platte 37 angeordnet ist und in der oberen Endstellung (aktivierter Zustand) die Rolle 40 in die zugehörige Steuerkurve 35 bzw. 36 eingreift. Durch entsprechende Hemm- oder Arretiermittel ist jeder Bolzen 39 in den beiden Endstellungen arretierbar. Diese Mittel sind bei der dargestellten Ausführungsform von einem Permanentmagneten 42 gebildet, der mit seinem Magnetfeld auf den jeweiligen Bolzen 39 einwirkt und eine Hemmung der Führung des Bolzens 39 bewirkt. Die Bolzen 39 sind jeweils in zwei Gleithülsen geführt, die an dem betreffenden Stößel 24 vorgesehen sind. Um eine möglichst große Wirkung des Permanentmagneten 42 auf den zugehörigen Bolzen sicherzustellen, ist dieser radial gegenüber dem Bolzen 39 versetzte Permanentmagnet 42 an seiner dem Bolzen mit geringem Abstand benachbarten Fläche konkav ausgebildet.

Die Steuerkurven 35 und 36 sind im Bereich der an der Welle 16 gebildeten Umlenkung bzw. in einem dortigen Rückstellbereich 43 so ausgebildet, daß dort die Tiefe jeder Nut 35' bzw. 36' abnimmt, wodurch auch aktivierte Mitnehmer 38a und 38b beim Passieren dieses Rückstellbereichs 43 in den nichtaktivierten Zustand zurückbewegt werden. Auf die im Bereich der Welle 17 gebildete Umlenkung folgend sind unterhalb der Bewegungsbahn der Mitnehmer 38a und 38b zwei Betätigungs- bzw. Aktivierungselemente 44a und 44b vorgesehen, und zwar das Aktivierungselement 44a für die Mitnehmer 38a unterhalb der Steuerkurve 35 und das Aktivierungselement 44b für die Mitnehmer 38b unterhalb der Steuerkurve 36.

Ist es erforderlich ein Überschubelement 25 zu aktivieren, so wird dann, wenn dieses Überschubelement bzw. dessen Mitnehmer die Aktivierungseinrichtungen 44a und 44b passieren, entsprechend der erforderlichen Bewegung des Überschubelementes 25 entweder die Aktivierungseinrichtung 44a oder die Aktivierungseinrichtung 44b betätigt, die dann mit einem Anschlag 45 auf das untere, vorstehende Ende des Bolzens 39 kurzzeitig einwirkt und diesen Bolzen aus der unteren Stellung in die obere Stellung bewegt. Für jede Flasche 2 werden die Aktivierungseinrichtung 44a und 44b an den Hilfstransporteuren 11a und 11b jeweils gegensinnig betätigt, d. h. soll eine Flasche 2 auf das Sortierband 4 übergeschoben werden, so ist die Steuerung der Überschubelemente 25 am Hilfstransporteur 11a durch die Steuerkurve 35 notwendig. Hierfür wird jeweils der Mitnehmer 38a der zu aktivierenden Überschubelemente 25 durch die Aktivierungseinrichtung 44a aktiviert. Für die Bewegung der entsprechenden Überschubelemente 25 am Hilfstransporteur 11b ist dann die Steuerkurve 36 maßgeblich. Hierfür werden dort die Mitnehmer 38b durch die Aktivierungseinrichtung 44b aktiviert.

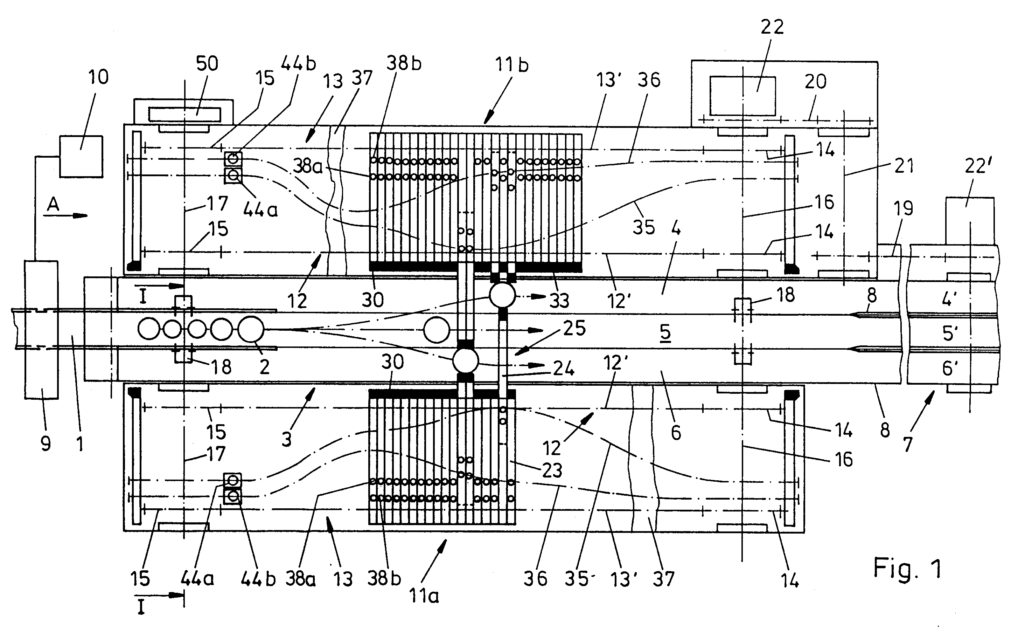

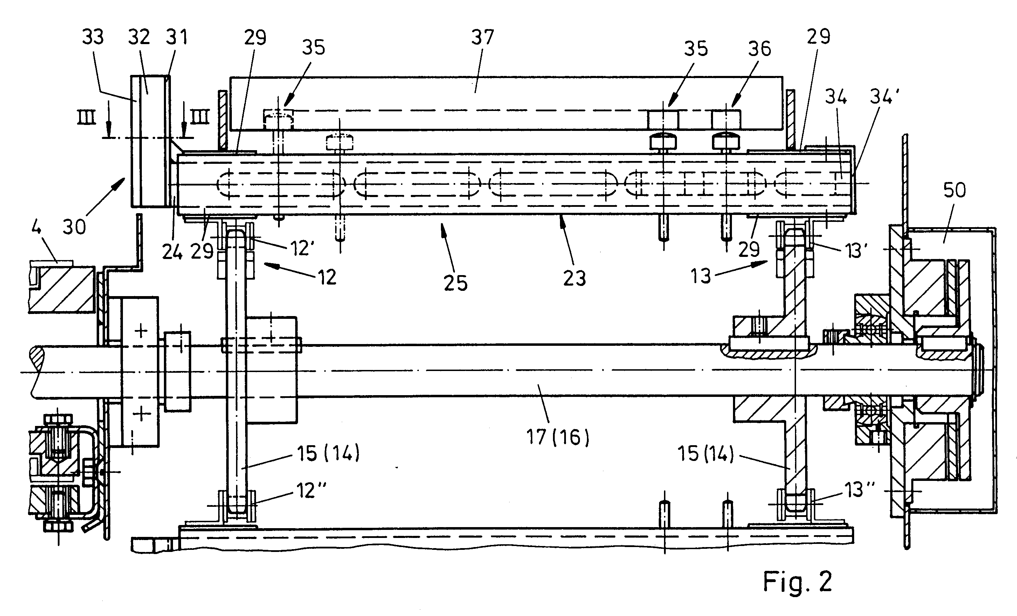

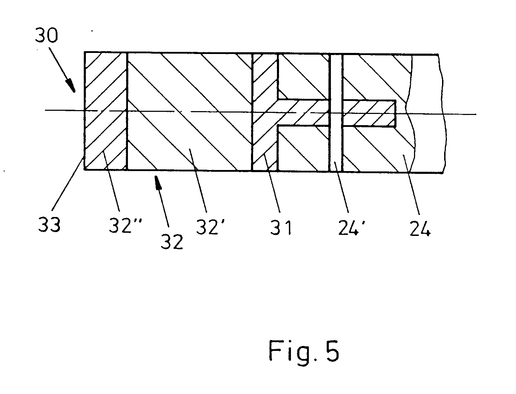

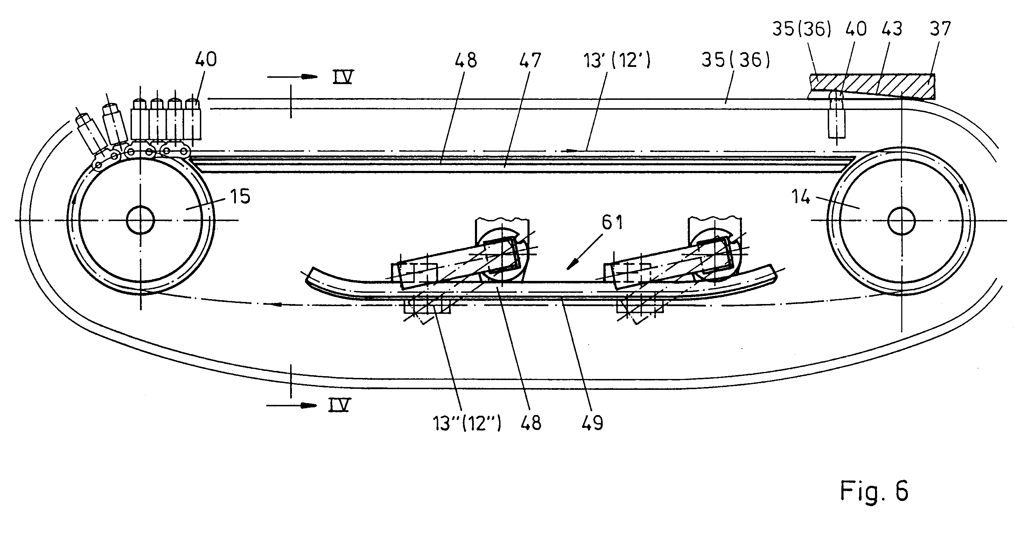

Bei der Ausführungsform nach den Figuren 1 - 7 sind die Aktivierungseinrichtungen 44a und 44b, die jeweils an beiden Hilfstransporteuren vorgesehen sind, Pneumatik-Zylinder 46.

Durch die Verwendung von jeweils zwei Steuerkurven 35 und 36 an jedem Hilfstransporteur 11a und 11b, von zwei Mitnehmern 38a und 38b an jedem Überschubelement 25 sowie von zwei Aktivierungseinrichtungen 44a und 44b an jedem Hilfstransporteur ergibt sich auch in Verbindung mit der Hemmeinrichtung bzw. dem Permanentmagneten 34 und der Sicherung der Bolzen 39 in den beiden Endstellungen (Hemmeinrichtung bzw. Permanentmagnet 42) eine einfache konstruktive Ausgestaltung bei hoher Betriebssicherheit, wobei insbesondere die beidseitige Abstützung der Flaschen 2 durch die Überschubelemente 25 bzw. deren Halteflächen 33 ein sicheres Überschieben und damit eine störungsfreie Sortierung auch solcher Flaschen ermöglicht, die nur ein äußerst geringes Gewicht aufweisen, d. h. beispielsweise aus Kunststoff bestehen.

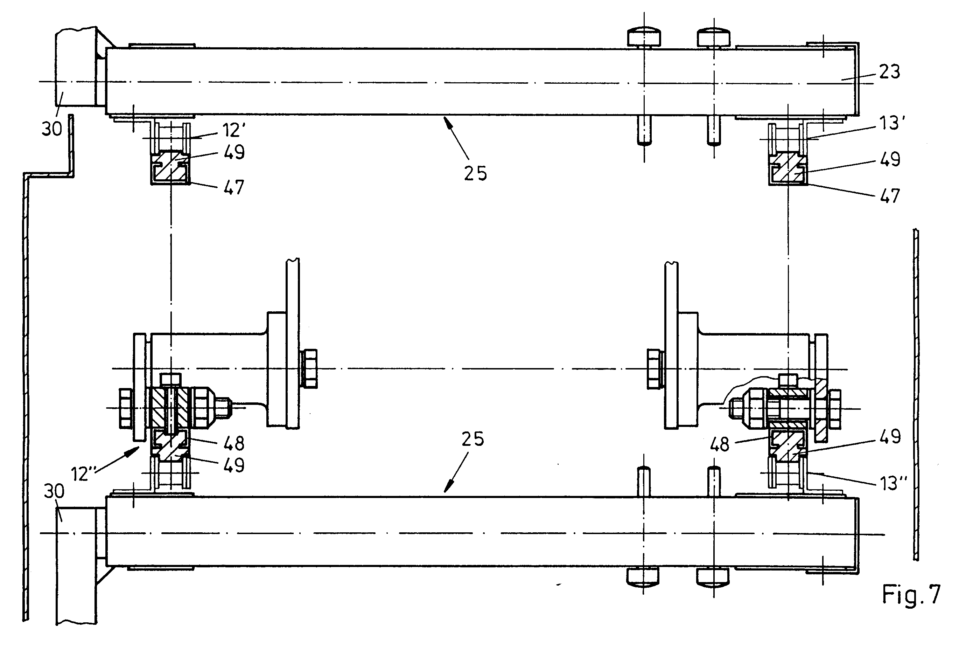

Wie die Figur 7 zeigt, ist für die obere Länge 12' und 13' aber auch für die untere Länge 12'' und 13'' jeder Kette 12 bzw. 13 eine Führung 47 bzw. 48 vorgesehen, wobei die untere Führung 48 zum Spannen der Kette 12 bzw. 13 verstellbar ist. Die unteren Führungen 48 sind Bestandteil einer Kettenspanneinrichtung 61. Jede Führung weist jeweils ein aus Kunststoff gefertigtes Gleitstück 49 auf, auf dem die Glieder der Kette gleiten.

Mit 50 ist noch eine Magnetbremse bezeichnet, die an einer der beiden Wellen 17 vorgesehen ist und die beim Abschalten des Antriebmotors 22 ein Abbremsen der Hilfstransporteure 11a und 11b bewirkt.

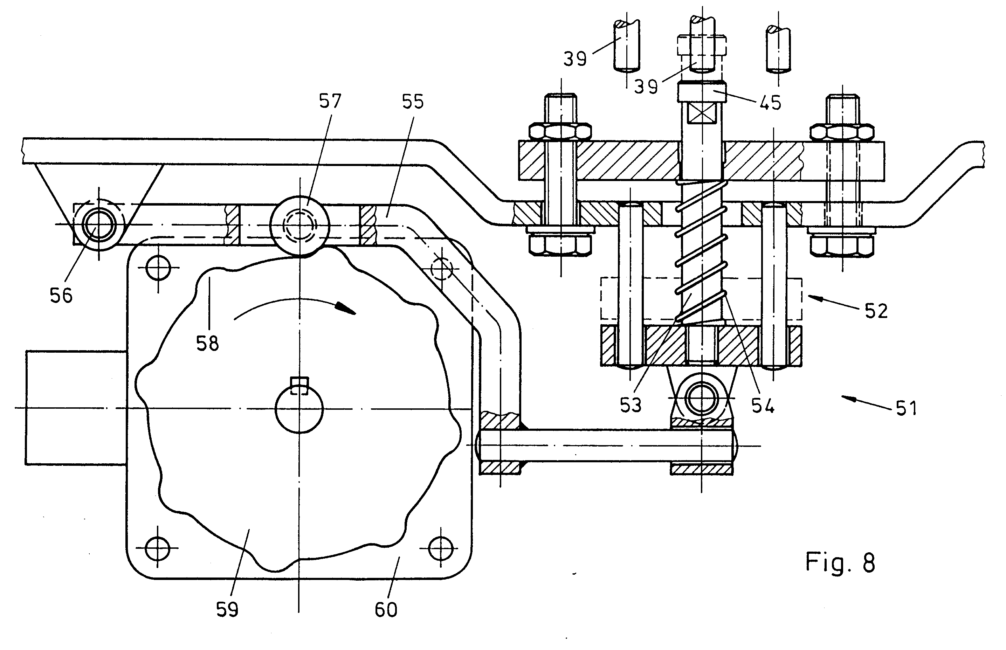

In der Figur 8 ist als weitere, bevorzugte Ausführung eine Betätigungs- bzw. Aktivierungseinrichtung 51 dargestellt, die anstelle der Aktivierungseinrichtung 44a bzw. 44b verwendet werden kann. Diese Aktivierungseinrichtung besteht im wesentlichen aus einem in vertikaler Richtung an einer Führung 52 geführten Bolzen 53, der an seinem oberen Ende den Anschlag 45 aufweist und durch eine Druckfeder 54 in eine untere Stellung vorgespannt ist. Das untere Ende des Bolzens 53 ist gelenkig mit einem Ende eines Schlepphebels 55 verbunden, der an seinem anderen Ende mittels eines Gelenkbolzens 56 um eine horizontale Achse schwenkbar gelagert ist. Mit Abstand vom Gelenkbolzen 56 ist am Schlepphebel 55 eine Rolle 57 vorgesehen, die mit einem Nocken 58 aufweisenden Schaltrad 59 zusammenwirkt. Das Schaltrad 59 ist auf der Ausgangswelle eines Schrittschaltwerkes bzw. -Motors 60 angeordnet. In der Normalstellung liegt die Rolle 57 gegen die Umfangsfläche des Schaltrades 59 zwischen zwei Nocken 58 an. Soll mit Hilfe der Aktivierungseinrichtung 51 ein Mitnehmer 38 bzw. 39 aktiviert werden und hierfür der Bolzen 53 aus seiner unteren Stellung in die obere Stellung bewegt werden, so wird das Schaltrad 59 um einen Schritt, d. h. um einen Drehwinkel, der dem Abstand zweier Nocken 58 entspricht, weitergedreht, wodurch die Rolle 57 kurzzeitig durch eine Nocke 58 angehoben und dadurch der Bolzen 53 zum Aktivieren des betreffenden Mitnehmers 38a bzw. 39b angehoben wird. Dieses Anheben erfolgt selbstverständlich dann, wenn der betreffende Mitnehmer bzw. dessen Bolzen 39 den Bolzen 53 bzw. den dortigen Anschlag 45 gerade passiert.

Die Erfindung wurde voranstehend an Ausführungsbeispielen beschrieben. Es versteht sich, daß Änderungen sowie Abwandlungen möglich sind, ohne daß dadurch der der Erfindung zugrundeliegende Erfindungsgedanke verlassen wird. So sind in der dargestellten Ausführungsform bei insgesamt drei Sortierbändern 4 - 6 für jeden Hilfstransporteur 11a und 11b jeweils zwei Steuerkurven 35 und 36 vorgesehen. Bei einer höheren Anzahl von Sortierbändern 4 - 6 bzw. Gassen 4' - 6' zum Abführen der sortierten Flaschen und damit mit einer höheren Anzahl von Überschub-Positionen für die Überschub-Elemente 25 ist auch eine höhere Anzahl von Steuerkurven vorgesehen, und zwar wiederum derart, daß diese Steuerkurven paarweise an den Hilfstransporteuren 11a und 11b vorgesehen sind, so daß jeder Steuerkurve an einem Hilfstransporteur eine Steuerkurve am anderen Hilftransporteur zugeordnet ist. Die Überschub-Position ist dabei jeweils diejenige Position, in die das jeweilige Überschub-Element 25 bzw. dessen Kopfstück 30 bewegt wird, bis eine Flasche 2 auf das dieser Flasche zugeordnete Sortierband 4 - 6 gelangt ist. Je nach Flaschengröße bzw. Flaschendurchmesser liegt die jeweilige Flasche 2 beim Überschieben gegen sämtliche oder nur gegen einen Teil der Anlageflächen 33 der verwendeten Überschubelemente 25 an.

### Bezugszeichenliste

- 1: Zuförderer
- 2: Flaschen
- 3: Sortierbereich
- 4 - 6: Sortierband
- 4' - 6': Gasse
- 7: Ausgangsbereich
- 8: Geländer
- 9: Kontrolleinrichtung
- 10: Steuereinrichtung
- 11a, 11b: Hilfstransporteur
- 12, 13: Kette
- 12', 13': obere Länge
- 12'', 13'': untere Länge
- 14, 15: Kettenrad
- 16, 17: Welle
- 18: Kardananordnung
- 19, 20: Kettentrieb
- 21: Welle
- 22: Antriebsmotor
- 22': Impulsgeber
- 23: Stößelführung
- 24: Stößel
- 24': Stift
- 25: Überschubelement
- 26: C-Profil
- 27: Kunststoffprofil
- 28: Führungsnut
- 29: Platte
- 30: Kopfstück
- 31: T-Profil
- 32: Puffer
- 32', 32'': Abschnitt
- 33: Anlagefläche
- 34: Permanentmagnet
- 34': Magnetanker
- 35, 36: Steuerkurve
- 35', 36': Nut
- 37: Platte
- 38a, 38b: Mitnehmer
- 39: Bolzen
- 40: Rolle
- 41: Ringnut
- 42: Permanentmagnet
- 43: Rückstellbereich
- 44a, 44b: Aktivierungseinrichtung
- 45: Anschlag
- 46: Pneumatikzylinder
- 47, 48: Führung
- 49: Kunststoff-Gleitstück
- 50: Magnetbremse
- 51: Aktivierungseinrichtung
- 52: Führung
- 53: Bolzen
- 54: Druckfeder
- 55: Schlepphebel
- 56: Gelenkbolzen
- 57: Rolle
- 58: Nocke
- 59: Schaltrad
- 60: Schrittschaltmotor
- 61: Kettenspannvorrichtung

## Patentansprüche

1. Vorrichtung zum Sortieren von Flaschen oder dergleichen Behälter (2), mit einem von wenigstens einer zweispurigen Transportstrecke (4 - 6) gebildeten Sortierbereich (3), dem die Behälter (2) auf einer ersten Spur (5) über einen Zuförderer (1) zugeführt werden und an den sich in einer Transportrichtung (A) der Transportstrecke (4 - 6) jeweils spurgleich wenigstens zwei Transportbereiche (4' - 6') zum Abführen der sortierten Behälter (2) anschließen, mit Überschubelementen (25), die an einer Hilfstransporteinrichtung (11a, 11b) vorgesehen, die mit dieser Hilfstransporteinrichtung synchron mit der Transportstrecke (4 - 6) des Sortierbereiches (3) bewegbar und die gesteuert durch eine Betätigungseinrichtung (35, 36, 38a, 38b) aus einer Ausgangsstellung quer zur Transportrichtung (A) bewegbar sind, um zum Sortieren mit Kopfstücken (30) Behälter (2) auf die ihrer Behälterart entsprechende Spur des Sortierbereiches (3) überzuschieben, sowie mit Mitteln (9, 10, 44a, 44b, 51) zum gesteuerten Aktivieren der Überschubelemente (25) für die Überschubbewegung, **dadurch gekennzeichnet**, daß die Überschubelemente (25) eine erste und eine zweite Gruppe solcher Elemente derart bilden, daß sich die beiden Gruppen der Überschubelemente (25) bezüglich ihrer Kopfstücke (30) quer zur Transportrichtung (A) am Sortierbereich (3) gegentiberliegen, und daß die Überschubelemente (25) derart bewegbar sind, daß beim Überschieben eines Behälters (2) dieser zwischen einander gegenüberliegenden und gleichsinnig bewegten Kopfstücken (30) wenigstens eines Überschubelementes (25) der ersten Gruppe und wenigstens eines Überschubelementes (25) der zweiten Gruppe angeordnet ist.

2. Vorrichtung nach Anspruch 1, dadurch gekennzeichnet, daß jeder Gruppe von Überschubelementen (25) eine Betätigungseinrichtung (35, 36; 38a, 38b) und Aktivierungsmittel (9, 10, 44a, 44b, 51) zugeordnet sind.

3. Vorrichtung nach Anspruch 1, dadurch gekennzeichnet, daß die Betätigungseinrichtung für die Überschubelemente (25) von an diesen vorgesehenen Mitnehmern (38a, 38b) und stationäre Steuerkurven (35, 36) für diese Mitnehmer gebildet sind.

4. Vorrichtung nach einem der Ansprüche 1 - 3, dadurch gekennzeichnet, daß die Hilfstransporteinrichtung von zwei Hilfstransporteuren (11a, 11b) gebildet ist, von denen jeweils ein Hilfstransporteur an jeder Seite des Sortierbereiches (3) vorgesehen ist, und daß an einem Hilfstransporteur (11a) die Überschubelemente (25) der ersten Gruppe und am zweiten Hilfstransporteur (11b) die Überschubelemente (25) der zweiten Gruppe vorgesehen sind.

5. Vorrichtung nach einem der Ansprüche 1 - 4, dadurch gekennzeichnet, daß für jedes Überschubelement (25) eine Arretier- oder Hemmeinrichtung, vorzugsweise mit einem Permanentmagneten (34) vorgesehen ist, die das Überschubelement (25), vorzugsweise den Stößel (24) dieses Überschubelementes in seiner Ausgangsstellung arretiert.

6. Vorrichtung nach Anspruch 3 - 5, dadurch gekennzeichnet, daß die Mitnehmer (38a, 38b) durch die Aktivierungsmittel (9, 10, 44a, 44b, 51) aus einer nicht aktivierten Stellung in eine aktivierte Stellung derart überführbar sind, daß sie in der nicht aktivierten Stellung außerhalb der jeweiligen Steuerkurve (35, 36) angeordnet sind und in der aktiviertem Stellung in die jeweilige Steuerkurve (35, 36) eingreifen.

7. Vorrichtung nach Anspruch 6, gekennzeichnet durch Hemm-oder Arretierungsmittel (42) zum Arretieren der Mitnehmer (38a, 38b) zumindest in der nicht aktivierten und der aktivierten Stellung.

8. Vorrichtung nach Anspruch 7, dadurch gekennzeichnet, daß die Arretierungsmittel Permanentmagneten (42) und/oder federnde Rasten aufweisen.

9. Vorrichtung nach einem der Ansprüche 1 - 8, dadurch gekennzeichnet, daß die Betätigungseinrichtung für die Überschubelemente (25) der ersten und zweiten Gruppe für jede Gruppe jeweils wenigstens zwei Steuerkurven (35, 36) aufweisen, und daß jedes Überschubelement (25) für jede ihm zugeordnete Steuerkurve (35, 36) wenigstens einen Mitnehmer (38a, 38b) aufweist.

10. Vorrichtung nach Anspruch 9, dadurch gekennzeichnet, daß für die jeder Steuerkurve (35, 36) zugeordneten Mitnehmer (38a, 38b) jeweils eine die Aktivierungsmittel bildende Aktivierungseinrichtung (44a, 44b) vorgesehen ist.

11. Vorrichtung nach einem der Ansprüche 1 - 10, dadurch gekennzeichnet, daß die Steuerkurven (35, 36) vorzugsweise in Form von Steuernuten (35', 36') an der Unterseite einer Platte (37) vorgesehen sind, unter der sich die Überschubelemente (25) bzw. an der Hilfstransporteinrichtung (11a, 11b) in Überschubrichtung geführte Stößel (24) dieser Elemente bewegen.

12. Vorrichtung nach einem der Ansprüche 1 - 11, dadurch gekennzeichnet, daß am Ende des Sortierbereiches (3) Mittel (43) vorgesehen sind, um aktivierte Mitnehmer (38a, 38b) in die nicht aktivierte Stellung zurückzuführen.

13. Vorrichtung nach Anspruch 12, dadurch gekennzeichnet, daß die Mittel zum Zurückführen der aktivierten Mitnehmer (38a, 38b) von einem Steuerkurvenabschnitt, vorzugsweise von einem Abschnitt der Steuerkurven (35, 36) gebildet sind.

14. Vorrichtung nach einem der Ansprüche 1 - 13, dadurch gekennzeichnet, daß die Aktivierungsmittel (44a, 44b) von einem Pneumatikzylinder (46) mit einem Anschlag (45) für die Mitnehmer (38a, 38b) gebildet sind, und daß zum Aktivieren eines Mitnehmers (38a, 38b) der Pneumatikzylinder kurzzeitig dann betätigt wird, wenn dieser Mitnehmer den Anschlag (45) passiert.

15. Vorrichtung nach einem der Ansprüche 1 - 14, dadurch gekennzeichnet, daß das Aktivierungsmittel von einem Anschlag (45) oder Stößel oder Bolzen (53) gebildet ist, der über ein Steuernocken (58) aufweisendes Steuerrad (57) durch einen Schrittantrieb (60) dann bewegbar ist, wenn ein zu aktivierender Mitnehmer (38a, 38b) den Anschlag (45) oder Stößel (53) passiert.

16. Vorrichtung nach einem der Ansprüche 1 - 15, dadurch gekennzeichnet, daß sich beidseitig von der ersten Spur (5) wenigstens eine weitere Spur (4, 6) anschließt.

17. Vorrichtung nach einem der Ansprüche 1 - 16, dadurch gekennzeichnet, daß die Transportstrecke des Sortierbereiches (3) von mehreren quer zur Förderrichtung (A) anschließenden Sortierbändern (4, 6) gebildet ist.

18. Vorrichtung nach Anspruch 17, dadurch gekennzeichnet, daß jede Spur von jeweils wenigstens einem Sortierband (4 - 6) gebildet ist.

19. Vorrichtung nach einem der Ansprüche 1 - 18, dadurch gekennzeichnet, daß die Hilfstransporteinrichtung oder die Hilfstransporteuere (11a, 11b) umlaufende Ketten (12, 13) aufweisen, an denen Führungen (23) für die Überschubelemente (25) bzw. deren Stößel (24) vorgesehen sind.

20. Vorrichtung nach einem der Ansprüche 3 - 19, dadurch gekennzeichnet, daß die Steuerkurven (35, 36) an jeweils einer, vorzugsweise aus Kunststoff gefertigten Platte (37) vorgesehen sind.

21. Vorrichtung nach Anspruch 20, dadurch gekennzeichnet, daß die Platte (37) zugleich eine obere Abdeckung für den jeweiligen Hilftransporteur (11a, 11b) bildet.

22. Vorrichtung nach einem der Ansprüche 1 - 21, dadurch gekennzeichnet, daß das jeweilige Kopfstück (30) abnehmbar an dem jeweiligen Überschubelement (25) oder an dem Stößel (24) dieses Überschubelementes vorgesehen ist.

23. Vorrichtung nach einem der Ansprüche 1 - 22, dadurch gekennzeichnet, daß das jeweilige Kopfstück (30) einen Puffer (32) besitzt, der zumindest teilweise aus einem weichen, elastischen Material besteht, vorzugsweise an einer Anlage- oder Überschubfläche (33) des Kopfstückes (30) aus einem verschleißfesten und/oder haftfähigen Material besteht.

24. Vorrichtung nach Anspruch 23, dadurch gekennzeichnet, daß der Puffer (32) an einem Profilstück, vorzugsweie an einem T-Profil (31) vorgesehen ist, mit welchem das Kopfstück (30) an dem jeweiligen Überschubelement (25) oder dessen Stößel (24) gehalten ist.

25. Vorrichtung nach einem der Ansprüche 1 - 24, dadurch gekennzeichnet, daß für den Stößel (24) jedes Überschubelementes (25) eine Stößelführung (23) vorgesehen ist, die von wenigsten einem äußeren Metallprofil (26) und von wenigstens einem in diesem Metallprofil angeordneten Kunststoffprofil (27) gebildet ist, und daß in wenigstens einer an dem Kunststoffprofil (27) ausgebildeten Führungsnut (28) der jeweilige, bevorzugt aus Edelstahl gefertigte Stößel (24) geführt ist.

26. Vorrichtung nach einem der Ansprüche 1 - 25, dadurch gekennzeichnet, daß die Überschubelemente (25) und/oder deren Kopfstücke (30) senkrecht zur Transportrichtung (A) bewegbar sind.

## Claims

1. Device for sorting bottles or similar containers (2) with a sorting area (3) formed by at least one two-track transport section (4-6) to which the containers are transported on a first track (5) by means of a feeder conveyor (1) and to which are connected, in the transport direction (A) of the transport section (4-6), respectively with the same gauge, at least two transport sections (4'-6') to remove the sorted containers (2) with pusher elements (25) which are provided on an auxiliary transport device (11a, 11b) and which, by means of this auxiliary transport device, can be moved synchronously with the transport section (4-6) of the sorting area (3) and can be moved in a controlled manner by an actuator (35, 36, 38a, 38b) from an initial position at right angles to the transport direction (A), to push the containers (2) to be sorted by means of headpieces (30) to the track of the sorting area (3) corresponding to their type of container, and with means (9, 10, 44a, 44b, 51) for the controlled actuation of the pusher elements (25) for the pushing movement, ***characterised in that*** the pusher elements (25) form a first and a second group of such elements so that the two groups of pusher elements (25) are opposite to one another, with reference to their headpieces (30) at right angles to the transport direction (A) in the sorting area (3), and that the pusher elements (25) can be moved so that during the pushing of a container (2), the container is located between head pieces (30) of at least one pusher element (25) of the first group and at least one pusher element of the second group located opposite one another and moved in the same direction.

2. Device according to claim 1, ***characterised in that*** for each group of pusher elements (25) there is an actuator device (35, 36, 38a, 38b) and actuator means (9, 10, 44a, 44b, 51).

3. Device according to claim 1, ***characterised in that*** the actuation device for the pusher elements (25) is formed by drivers (38a, 38b) provided on the pusher element (25) and stationary control cams (35, 36) for these drivers.

4. Device according to one of the preceding claims 1-3, ***characterised in that*** the auxiliary transport device is formed by two auxiliary conveyors (11a, 11b) provided on each side of the sorting area (3) and that the pusher elements (25) of the first group are provided on one auxiliary conveyor (11a) and the pusher elements (25) of the second group are provided on the second auxiliary conveyor (11b).

5. Device according to one of the claims 1-4, ***characterised in that*** for each pusher element (25) there is a stopping or blocking device, preferably with a permanent magnet (34) which stops the pusher element (25), preferably the ram (24) of said pusher element in its initial position.

6. Device according to the preceding claims 3-5, ***characterised in that*** the drivers (38a, 38b) can be switched by the actuating means (9, 10, 44a, 44b, 51) from a non-actuated position into an actuated position, such that in the non-actuated position they are located outside the respective control cam (35, 36) and in the actuated position are engaged in the respective control cam (35, 36).

7. Device according to claim 6, ***characterised*** by blocking or stopping means (42) to stop the drivers (38a, 38b) at least in the non-actuated and actuated position.

8. Device according to claim 7, ***characterised in that*** the blocking and stopping means (42) comprise permanent magnets and/or flexible catches.

9. Device according to one of the preceding claims 1-8, ***characterised in that*** the actuation device for the pusher elements (25) of the first and the second group has at least two control cams (35, 36) for each group respectively and that each pusher element (25) has at least one driver (38a, 38b) for each control cam (35, 36) corresponding to it.

10. Device according to claim 9, ***characterised in that*** for each driver (38a, 38b) corresponding to each control cam (35, 36) there is an actuation device (44a, 44b) which forms the actuation means.

11. Device according to one of the preceding claims 1-10, ***characterised in that*** the control cams (35, 36) are preferably in the form of control grooves 35', 36' on the underside of a plate (37) below which the pusher elements (25) or ram (24) of these elements guided in the pushing direction on the auxiliary transport device (11a, 11b) move.

12. Device according to one of the preceding claims 1-11, ***characterised in that*** at the end of the sorting area (3) there are means (43) to return actuated drivers (38a, 38b) to the non-actuated position.

13. Device according to claim 12, ***characterised in that*** the means to return the actuated drivers (38a, 38b) are formed by a control cam segment, preferably by a segment of the control cams (35, 36).

14. Device according to one of the preceding claims 1-13, ***characterised in that*** the actuation means (44a, 44b) are formed by a pneumatic cylinder (46) with a stop (45) for the drivers (38a, 38b), and that to actuate a driver (38, 38b) the pneumatic cylinder is actuated briefly when this driver passes the stop (45).

15. Device according to one of the preceding claims 1-14, ***characterised in that*** the actuating means are formed by a stop (45) or ram or bolt (53) which can be moved by means of a control wheel (57) which has control cams (58) and by means of a stepper drive (60), when a driver (38a, 38b) passes the stop (45) or ram (53).

16. Device according to one of the preceding claims 1-15, ***characterised in that*** there is at least one additional track (4, 6) on both sides of the first track (5).

17. Device according to one of the preceding claims 1-16, ***characterised in that*** the transport section of the sorting area (3) is formed by several sorting belts (4, 6) which are connected at right angles to the transport direction A.

18. Device according to claim 17, ***characterised in that*** each track is formed by at least one sorting belt (4-6).

19. Device according to one of the preceding claims 1-18, ***characterised in that*** the auxiliary transport device or the auxiliary conveyors (11a, 11b) have circulating chains 12, 13, on which there are guides (23) for the pusher elements (25) or their rams (24).

20. Device according to one of the preceding claims 3-19, ***characterised in that*** the control cams (35, 26) are each provided with a plate 37, preferably made of plastic.

21. Device according to claim 20, ***characterised in that*** the plate (37) simultaneously forms a top cover for the respective auxiliary conveyor (11a, 11b).

22. Device according to one of the preceding claims 1-21, ***characterised in tha*****t** the respective headpiece (30) is removably provided on the respective pusher element (25) or on the ram (24) of this pusher element.

23. Device according to one of the preceding claims 1-22, ***characterised in that*** the respective headpiece (30) has a buffer (32) which consists at least partly of a soft, eleastic material, preferably on a stop surface or pusher surface (33) of the headpiece (30).

24. Device according to claim 23, ***characterised in that*** the buffer (32) is provided on a profile piece, preferably on a T-profile (31) by means of which the headpiece (30) is held on the respective pusher element (25) or its ram (24).

25. Device according to one of the preceding claims 1-24, ***characterised in that*** for the ram (24) of each pusher element (25) there is a ram guide (23) which is formed by at least one outer metal profile (26) and by at least one plastic profile (27) located in this metal profile, and that the ram, which is preferably made of special steel (24), is guided in at least one guide groove (28) formed on the plastic profile (27).

26. Device according to one of the preceding claims 1-25, ***characterised in that*** the pusher elements (25) and/or their head pieces (30) can be moved perpendicular to the transport direction (A).

## Revendications

1. Dispositif pour le triage de bouteilles ou de récipients similaires (2) avec une zone de triage (3) formée d'au moins une bande transporteuse à deux voies (4 - 6) vers laquelle les récipients (2) sont conduits sur une première voie (5) par l'intermédiaire d'un convoyeur d'amenée (1) et sur laquelle se raccordent, dans une direction de transport (A) de la bande transporteuse (4 - 6), avec une largeur de voie identique respective, au moins deux bandes transporteuses (4' - 6') pour l'évacuation des récipients triés (2), avec des éléments pousseurs (25) prévus sur un dispositif de transport auxiliaire (11a, 11b) qui sont mobiles avec ce dispositif de transport auxiliaire de façon synchrone avec la bande transporteuse (4 - 6) de la zone de triage (3) et qui, commandés par un système de commande (35, 36, 38a, 38b), sont mobiles à partir d'une position de départ transversalement par rapport à la direction de transport (A) afin de faire glisser les récipients (2) sur la voie de la zone de triage (3) correspondant à leur type de récipient avec des pièces de tête (30), ainsi qu'avec des moyens (9, 10, 44a, 44b, 51) pour l'activation commandée des éléments pousseurs (25) pour le mouvement de glissement, caractérisé en ce que les éléments pousseurs (25) forment un premier groupe et un deuxième groupe d'éléments de ce type de façon que les deux groupes d'éléments pousseurs (25), en ce qui concerne leurs pièces de tête (30), sont opposés transversalement par rapport à la direction de transport (A) sur la zone de triage (3) et que les éléments pousseurs (25) sont mobiles de façon qu'en faisant glisser un récipient (2), celui-ci est disposé entre des pièces de tête (30) opposées et déplacées dans le même sens d'au moins un élément pousseur (25) du premier groupe et d'au moins un élément pousseur (25) du second groupe.

2. Dispositif selon la revendication 1, caractérisé en ce qu'un système de commande (35, 36; 38a, 38b) et un moyen d'activation (9, 10, 44a, 44b, 51) sont attribués à chaque groupe d'éléments pousseurs (25).

3. Dispositif selon la revendication 1, caractérisé en ce que les systèmes de commande pour les éléments pousseurs (25) sont formés de poussoirs (38a, 38b) prévus sur ceux-ci et de cames de commande fixes (35, 36) pour ces poussoirs.

4. Dispositif selon l'une des revendications 1 à 3, caractérisé en ce que le dispositif de transport auxiliaire est formé de deux transporteurs auxiliaires (11a, 11b) desquels respectivement un transporteur auxiliaire est prévu sur chaque côté de la zone de triage (3) et en ce que sont prévus sur un transporteur auxiliaire (11a), les éléments pousseurs (25) du premier groupe et sur le second transporteur auxiliaire (11b), les éléments pousseurs (25) du second groupe.

5. Dispositif selon l'une des revendications 1 à 4, caractérisé en ce que pour chaque élément pousseur (25), un système d'arrêt ou de blocage, de préférence avec un aimant permanent (34), est prévu qui arrête l'élément pousseur (25), de préférence le coulisseau (24) de cet élément pousseur, dans sa position de départ.

6. Dispositif selon les revendications 3 à 5, caractérisé en ce que les poussoirs (38a, 38b) peuvent être déplacés par l'intermédiaire des moyens d'activation (9, 10, 44a, 44b, 51) d'une position non activée à une position activée de façon qu'en position non activée ils sont disposés en dehors des cames de commande (35, 36) respectives et qu'ils viennent en prise dans les cames de commande respectives (35, 36) en position activée.

7. Dispositif selon la revendication 6, caractérisé par des moyens de blocage ou d'arrêt (42) pour arrêter le poussoir (38a, 38b) au moins dans la position non activée et dans la position activée.

8. Dispositif selon la revendication 7, caractérisé en ce que les moyens d'arrêt présentent des aimants permanents (42) et/ou des crans d'arrêt à ressort.

9. Dispositif selon l'une des revendications 1 à 8, caractérisé en ce que le système de commande pour les éléments pousseurs (25) du premier et du deuxième groupe présente, respectivement pour chaque groupe, au moins deux cames de commande (35, 36) et en ce que chaque élément pousseur (25) présente au moins un poussoir (38a, 38b) pour chaque came de commande qui lui est attribuée (35, 36).

10. Dispositif selon la revendication 9, caractérisé en ce que pour le poussoir (38a, 38b) attribué à chaque came de commande (35, 36), il est prévu un système d'activation formant le moyen d'activation (44a, 44b).

11. Dispositif selon l'une des revendications 1 à 10, caractérisé en ce que les cames de commande (35, 36) sont prévues de préférence en forme de rainures de commande (35', 36') sur le côté inférieur d'une plaque (37) sous laquelle se déplacent les éléments pousseurs (25) ou des coulisseaux (24) de ces éléments guidés dans la direction de poussée sur le dispositif de transport auxiliaire (11a, 11b).

12. Dispositif selon l'une des revendications 1 à 11, caractérisé en ce que sur l'extrémité de la zone de triage (3), des moyens (43) sont prévus afin de rappeler les poussoirs activés (38a, 38b) dans la position non activée.

13. Dispositif selon la revendication 12, caractérisé en ce que les moyens pour rappeler le poussoir activé (38a, 38b) sont formés d'un segment de came de commande, de préférence d'un segment de la came de commande (35, 36).

14. Dispositif selon l'une des revendications 1 à 13, caractérisé en ce que les moyens d'activation (44a, 44b) sont formés d'un vérin pneumatique (46) avec une butée (45) pour le poussoir (38a, 38b) et en ce que pour l'activation d'un poussoir (38a, 38b), le vérin pneumatique est momentanément actionné lorsque ce poussoir passe la butée (45).

15. Dispositif selon l'une des revendications 1 à 14, caractérisé en ce que le moyen d'activation est formé d'une butée (45) ou d'un coulisseau ou d'une goupille (53) qui, par l'intermédiaire d'une roue de commande (57) présentant une came radiale (58), est mobile au moyen d'un entraînement pas à pas (60) lorsqu'un poussoir qui doit être activé (38a, 38b) passe la butée (45) ou le coulisseau (53).

16. Dispositif selon l'une des revendications 1 à 15, caractérisé en ce qu'au moins une autre voie (4, 6) se raccorde de part et d'autre de la première voie (5).

17. Dispositif selon l'une des revendications 1 à 16, caractérisé en ce que la bande transporteuse de la zone de triage (3) est formée de plusieurs bandes de triage (4, 6) adjacentes transversales par rapport à la direction de transport (A).

18. Dispositif selon la revendication 17, caractérisé en ce que chaque voie est formée d'au moins une bande de triage (4 - 6).

19. Dispositif selon l'une des revendications 1 à 18, caractérisé en ce que le système de transport auxiliaire ou les transporteurs auxiliaires (11a, 11b) présentent des chaînes sans fin (12, 13) sur les guidages (23) desquelles il est prévu des éléments pousseurs (25) ou leurs coulisseaux (24).

20. Dispositif selon l'une des revendications 3 à 19, caractérisé en ce que les cames de commande (35, 36) sont prévues sur respectivement une plaque (37) faite de préférence en matière plastique.

21. Dispositif selon la revendication 20, caractérisé en ce que la plaque (37) forme aussi un couvercle supérieur pour le transporteur auxiliaire respectif (11a, 11b).

22. Dispositif selon l'une des revendications 1 à 21, caractérisé en ce que chaque pièce de tête (30) est montrée amovible sur l'élément pousseur (25) respectif ou sur le coulisseau (24) de cet élément pousseur.

23. Dispositif selon l'une des revendications 1 à 22, caractérisé en ce que chaque pièce de tête (30) possède un tampon (32) qui est au moins partiellement composé d'un matériau élastique souple, de préférence sur une surface d'appui ou de poussée (33) de la pièce de tête (30) composée d'un matériau résistant à l'usure et/ou apte à l'adhérence.

24. Dispositif selon la revendication 23, caractérisé en ce que le tampon (32) est prévu sur une pièce profilée, de préférence un profilé en T (31), par lequel la pièce de tête (30) est maintenue sur l'élément pousseur (25) respectif ou son coulisseau (24).

25. Dispositif selon l'une des revendications 1 à 24, caractérisé en ce que pour le coulisseau (24) de chaque élément pousseur (25), il est prévu une glissière de coulisseau (23) qui est formée d'au moins un profilé métallique extérieur (26) et d'au moins un profilé en matière plastique (27) disposé dans ce profilé métallique, et en ce que le coulisseau (24) respectif, fabriqué de préférence en métal précieux, est guidé dans au moins une rainure de guidage (28) formée dans le profilé en matière plastique (27).

26. Dispositif selon l'une des revendications 1 à 25, caractérisé en ce que les éléments pousseurs (25) et/ou leurs pièces de tête (30) sont mobiles perpendiculairement à la direction de transport (A).
